# FASCICULE DE BREVET EUROPEEN

(11) **EP 0 722 265 B1**
(45) Date de publication et mention de la délivrance du brevet: **07.04.1999**
(21) Numéro de dépôt: 94928941.7
(22) Date de dépôt: 04.10.1994
(51) Int. Cl.: A01C 1/00

(54) **PROCEDE ET INSTALLATION POUR LE TRAITEMENT DES SEMENCES ET DES BULBES**
VERFAHREN UND EINRICHTUNG ZUR BEHANDLUNG VON SÄMEN UND ZWIEBELN
METHOD AND SYSTEM FOR THE TREATMENT OF SEEDS AND BULBS

(30) Priorité: 04.10.1993 FR 9311776
(43) Date de publication de la demande: 24.07.1996
(73) Titulaire: LABORATOIRES GOEMAR, 35413 Saint-Malo (FR); DEGREMONT, F-92506 Rueil-Malmaison (FR)
(72) Inventeur: YVIN, Jean-Claude, F-35403 Saint-Malo (FR); COSTE, Christian, F-78000 Versailles (FR)
(74) Mandataire: Hubert, Philippe
(86) Numéro de dépôt international: FR9401153
(87) Numéro de publication internationale: WO9509523

(56) Documents cités:
- EP-A- 0 030 575
- FR-A- 2 287 844
- DATABASE WPI Section PQ, Week 8604, Derwent Publications Ltd., London, GB; Class P11, AN 86-027273 [04] & SU,A,1 166 693 (GRODNO AGRIC. INST.) 15 Juillet 1985
- DATABASE WPI Section Ch, Week 9338, Derwent Publications Ltd., London, GB; Class C07, AN 93-298891 [38] & JP,A,05 211 808 (JAPAN STEEL WORKS LTD.) 24 Août 1993
- PATENT ABSTRACTS OF JAPAN vol. 013, no. 501 (C-0652) 10 Novembre 1989 & JP,A,01 199 504 (HIROSHI SAITO) 10 Août 1989
- PATENT ABSTRACTS OF JAPAN vol. 016, no. 148 (C-0928) 13 Avril 1992 & JP,A,04 004 818 (ISHIKAWAJIMA HARIMA HEAVY IND. CO. LTD.) 9 Janvier 1992
- DATABASE WPI Section PQ, Week 9408, Derwent Publications Ltd., London, GB; Class P11, AN 94-063411 [08] & SU,A,1 789 092 (NORILSK IND. EVENING INST.) 23 Janvier 1993

## Description

La présente invention a pour objet un nouveau procédé et une installation pour le traitement des semences et des bulbes, destinés à l'amélioration de leur propriétés germinatives et/ou de leur croissance.

L'invention trouve notamment application dans les domaines de l'agriculture et de l'horticulture.

On sait que les semences destinées à la production agricole présentent, lorsqu'elles sont utilisées à l'état naturel, un certain nombre de carences se traduisant notamment par un pourcentage de germination restreint, par des défauts de croissance et par une pathologie qui leur est spécifique.

En effet, les semences ayant une origine tellurique, il existe à leur périphérie un certain nombre d'organismes pathogènes dont l'activité induit un pourcentage de germination aléatoire ainsi que des défauts dans l'évolution de la plante après germination.

Les organismes produisant et commercialisant ces semences sont confrontés à la résolution des problèmes en résultant.

Il est également connu dans l'art antérieur que l'ozone produit à partir de gaz vecteurs, qui peuvent être indifféremment l'oxygène de l'air ou l'oxygène pur ou un mélange en proportions variables des deux, présente des propriétés bactéricides, virulicides, fongicides, stérilisantes qui ont été largement mises à profit dans le traitement des eaux ainsi qu'en milieu industriel.

On a également proposé dans l'état de la technique d'utiliser l'ozone dans le cadre du traitement de graines ou de plantes.

Ainsi, dans le document JP-44818, il est suggéré, pour stimuler la croissance des plantes, d'augmenter la concentration en oxygène au niveau de leurs racines, en introduisant postérieurement à la mise en culture de la plante un gaz ionisé tel que l'ozone au niveau des racines.

Dans le document JP-1199504 il est suggéré de traiter des graines en immergeant ces dernières dans de l'eau et en appliquant simultanément dans cette eau de l'ozone et des ultrasons.

Selon ce document antérieur, le générateur d'ultrasons permet d'améliorer la pénétration de l'eau dans les graines et d'accélerer ainsi l'action de différentes variétés d'enzymes sur les graines.

Dans le document JP-5211808, il est également proposé d'immerger des graines dans de l'eau et d'y introduire de l'ozone.

Comme en ce qui concerne le traitement décrit dans le document précédent, celui-ci ne peut se faire qu'immédiatement avant la plantation des graines ou nécessiste un traitement complémentaire de séchage, dans l'hypothèse où l'on souhaite stocker les graines ainsi traitées pendant un temps plus ou moins long préalablement à leur plantation.

Dans le document SU-1166693, il est proposé en vue d'améliorer les propriétés germinatives des semences, de soumettre ces dernières à une ventilation par de l'ozone en présence d'un oxydant puissant, pendant une durée relativement longue de 25 à 45 heures.

Il est indiqué dans ce document antérieur que les cellules détruites par l'ozone forment des composants qui constituent un excellent milieu nutritif pour les graines et que l'on obtient ainsi une augmentation de la germination de ces dernières d'environ 9 à 150%.

Il a été découvert, et ceci constitue le fondement de la présente invention, qu'il était possible d'améliorer les propriétés germinatives et/ou la croissance des semences et des bulbes, par un traitement avec de l'ozone, préférentiellement produit à partir de gaz vecteurs, sans faire appel à un agent oxydant complémentaire, en une durée relativement courte, et que l'accessibilité de l'ozone aux structures lignocellulosiques des semences était dépendante du taux d'humidité dans ladite structure et qu'il était donc possible d'améliorer encore les résultats obtenus, en ajustant le taux d'humidité des semences ou des bulbes préalablement ou simultanément au traitement par l'ozone.

Il a en outre été observé, de façon tout à fait surprenante et inattendue, que les effets du traitement conforme à la présente invention continuent de se manifester dans le temps et sont pratiquement irréversibles dans des conditions normales de stockage avant plantation, et en l'absence de contamination parasité.

Par conséquent, le procédé de traitement conforme à la présente invention ne nécessite aucune étape complémentaire de séchage, dans l'hypothèse où ce traitement est réalisé sur des semences ou des bulbes destinés à être stockés pendant un temps plus ou moins long avant plantation.

Ainsi, selon un premier aspect, la présente demande vise à couvrir un procédé de traitement des semences et des bulbes, dans lequel préalablement à leur plantation et notamment en vue d'améliorer leurs propriétés germinatives et/ou leur croissance, on met lesdites semences ou lesdits bulbes en contact avec de l'ozone, préférentiellement produit à partir de gaz vecteurs, caractérisé en ce que l'on ajuste le taux d'humidité résiduelle desdites semences ou desdits bulbes préalablement ou simultanément à leur mise en contact avec l'ozone, à une valeur améliorant l'accessibilité de l'ozone aux structures lignocellulosiques, cette valeur étant de préférence comprise entre 5 et 60 % par rapport au poids des semences ou des bulbes, les semences et bulbes traités étant susceptibles d'être stockés sans étape supplémentaire de séchage.

Des essais, réalisés sur des semences d'origines diverses, représentatives des grandes familles existantes ont montré qu'un traitement par l'ozone, sans agent complémentaire, permet d'améliorer de façon importante et inattendue le taux de germination des semences traitées ainsi que la matière sèche obtenue dans la biomasse produite.

En fait, l'ozone exerce sur les semences un effet de type régulateur de croissance dont les principales caractéristiques sont une réduction de l'effet mécanique de la rupture de la cuticule lors de la germination, ainsi que la disparition des effets pathogènes présents à la surface de la cuticule et l'inertage ou la neutralisation des spores ou souches fongiques.

D'autres essais ont montré que des résultats positifs, de même nature que ceux observés pour les semences, pouvaient être obtenus dans le cadre du traitement des bulbes, et en particulier les bulbes d'iris, de tulipe, de glaïeul ou de jacinthe.

Les semences susceptibles d'être traitées par le procédé de l'invention peuvent être de nature variée. Ce procédé s'applique tout particulièrement aux semences de maïs, de haricot, d'orge et de tournesol.

L'ozone susceptible d'être utilisée dans le cadre de la présente invention sera généralement produit, de préférence par un ozoneur de type industriel, à partir de gaz vecteurs, en particulier l'oxygène de l'air ou l'oxygène pur, ou un mélange en proportions variables des deux.

Les conditions du traitement conforme au procédé de l'invention sont essentiellement fonction du type de la semence ou du bulbe à traiter, de son taux d'humidité, de la nature et de l'épaisseur de son tégument et de son état pathologique.

D'une façon générale, l'homme de métier pourra relativement aisément déterminer les conditions optimales de mise en oeuvre.

Les demandeurs ont pu constater que les meilleurs résultats sont généralement obtenus lorsque l'une au moins des conditions suivantes est réalisée :
- l'ozone est utilisé en une quantité comprise entre 0,002 et 0,1 exprimée en gramme d'ozone par gramme de semence ;
- la durée du traitement est comprise entre 2 et 30 minutes ;
- l'ozone utilisé est produit à partir d'un gaz vecteur, et la concentration de l'ozone dans le gaz vecteur est comprise entre 20 et 100 g/Nm³ ;
- le traitement est mis en oeuvre dans un réacteur et la pression de l'atmosphère gazeuse dans ce réacteur est comprise entre 100 et 1 000 mbar.

Avantageusement, l'humidité nécessaire au traitement conforme à l'invention pourra être apportée aux semences par le gaz vecteur.

En effet, lorsque l'ozone est généré sur un gaz vecteur (air ou oxygène) dont l'humidité est très faible (point de rosée compris entre -60°C et -80°C), il sera procédé avantageusement à une saturation du gaz ozoné à pression et température ambiantes, par bullage dans une solution d'eau déminéralisée. Le gaz ainsi chargé d'humidité apporte à la semence ou aux bulbes le surcroît d'eau qui leur faisait défaut.

Cet aspect de l'invention est particulièrement original dans la mesure où le lavage ou l'humidification directe des semences s avère impossible dans la pratique.

La mise en contact des semences avec l'ozone sera généralemnet effectuée dans un réacteur.

L'homme de métier déterminera aisément le type de réacteur à utiliser, en fonction de la nature, la taille et la fragilité des semences ou des bulbes à traiter.

D'une façon générale, la réaction de l'ozone à la surface de la graine se faisant par échange de type gaz-solide, puis diffusion au sein de la structure, il est nécessaire, pour obtenir un traitement optimal et reproductible, de choisir un réacteur conformé pour permettre d'assurer en permanence un renouvellement de l'interface réactionnelle et une accessibilité de chacune des graines ou de chacun des bulbes à traiter.

Selon un mode particulier de réalisation de l'invention, le procédé décrit précédemment sera mis en oeuvre de façon discontinue, de préférence dans un réacteur à axe horizontal agité.

Selon un autre mode de réalisation, ce procédé sera mis en oeuvre de façon continue, de préférence dans un réacteur à axe vertical agité.

Selon un second aspect, la présente demande vise à couvrir une installation pour la mise en oeuvre du procédé décrit précédemment, comprenant :
- un dispositif de production d'ozone, de préférence dans un gaz vecteur
- un réacteur destiné à permettre la mise en contact de l'ozone avec des semences ou des bulbes ;
caractérisée en ce qu'elle comprend en outre des moyens permettant d'ajuster le taux d'humidité résiduelle des semences ou des bulbes, à une valeur améliorant l'accessibilité de l'ozone aux structures lignocellulosiques, cette valeur étant de préférence comprise entre 5% et 60% par rapport au poids des semences ou des bulbes et en ce que ledit réacteur est conformé pour permettre d'assurer en permanence un renouvellement de l'interface réactionnel et une accessibilité de chacune des graines ou de chacun des bulbes à traiter.

L'invention sera mieux comprise, et d'autres buts, caractéristiques et détails de celle-ci apparaîtront plus clairement à la lecture de la description explicative qui va suivre, faite en référence aux exemples et aux dessins schématiques annexés donnés uniquement à titre non limitatif et dans lesquels :
- la figure 1 illustre de façon schématique une installation pour la mise en oeuvre du procédé selon l'invention, de façon discontinue, dans un réacteur à axe horizontal agité ;
- la figure 2 illustre de façon schématique une installation pour la mise en oeuvre du procédé selon l'invention, de façon continue, dans un réacteur à axe vertical agité ; et
- les figures 3A et 3B illustrent deux profils de pâles pouvant être utilisés pour brasser des semences ou des bulbes dans un réacteur à axe horizontal fonctionnant de façon discontinue.

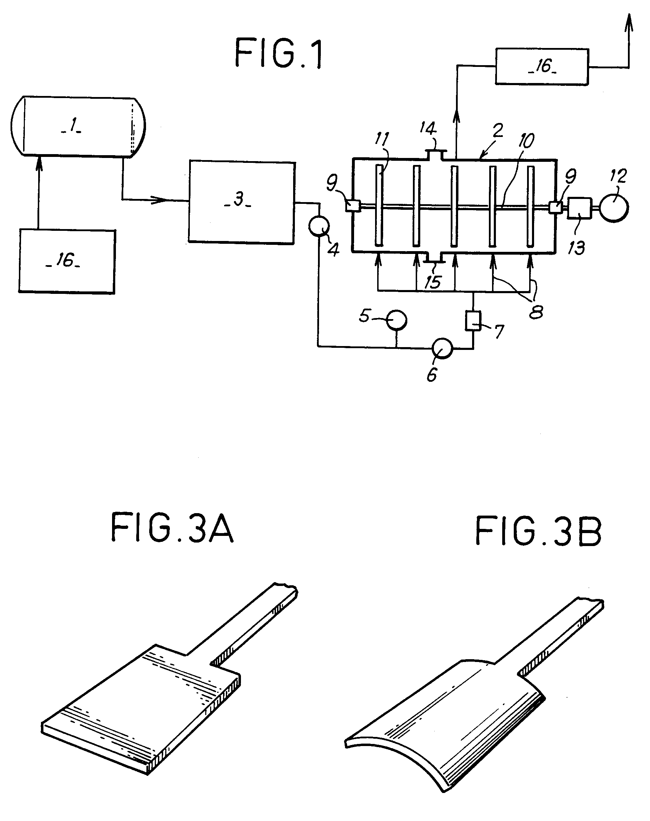

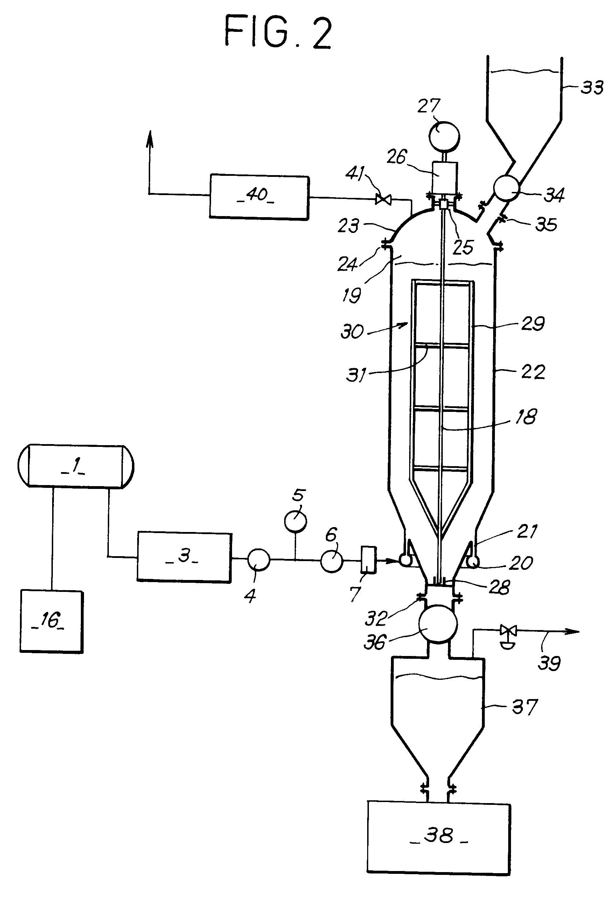

En référence à la figure 1, on décrira tout d'abord une installation pour la mise en oeuvre discontinue (ou en batch) du procédé conforme à la présente invention.

Le chiffre de référence 1 désigne un ozoneur de type industriel comme par exemple du type alimenté électriquement sous la fréquence industrielle du réseau (50 Hz) ou par l'intermédiaire d'un convertisseur de fréquence, à une fréquence comprise entre 600 et 1 200 Hz.

L'ozone sera produit à partir de gaz vecteurs, qui seront indifféremment l'oxygène de l'air, ou l'oxygène pur, ou un mélange en proportions variables des deux.

Une source d'alimentation en gaz vecteurs est représentée sous le chiffre de référence 16.

L'air ozoné ou l'oxygène ozoné sortant de l'ozoneur industriel 1 peut être introduit directement dans le réacteur 2, pour assurer le traitement de la semence ou des bulbes.

Avantageusement, pour ajuster l'humidité résiduelle des semences ou des bulbes à traiter, il peut être éventuellement procédé à une humidification du gaz ozoné par un dispositif classique, connu de l'homme de l'art, représenté par le chiffre de référence 3, et permettant de saturer le gaz ozoné en eau, aux conditions de pression et de température ambiantes.

Dans le cas d'un traitement préalable d'humidification du gaz ozoné, on mesurera l'humidité par un hygromètre de type industriel représenté par le chiffre de référence 4.

Les conditions opératoires de l'ozonation pourront être vérifiées avant l'introduction du gaz ozoné dans le réacteur 2, en mesurant la pression du flux gazeux à l'aide d'un organe de mesure approprié 5, ainsi que le débit gazeux à l'aide d'un organe de mesure approprié 6. Le flux gazeux pourra être ajusté à l'aide d'un organe de réglage représenté par le chiffre de référence 7.

Les organes de mesure 5, 6 et de réglage 7, connus de l'homme de l'art, devront être choisis pour résister à l'ozone qui est un oxydant puissant.

Le gaz ozoné est introduit dans le réacteur 2 par un ensemble de buses de distribution 8.

Le nombre de buses, et la dimension de ces dernières, en particulier leur diamètre, pourront être déterminées relativement aisément par l'homme de métier en fonction de la nature de la semence à traiter, de la taille des graines, de la surface spécifique de la semence et de la hauteur de la couche de semences à l'intérieur du réacteur.

D'une façon générale, et selon un mode de réalisation actuellement préféré, le nombre de points d'injection sera compris entre 5 et 15 et la vitesse du gaz à la sortie des buses sera comprise entre 20 et 60 m/s.

Le réacteur 2 présente une forme générale cyclindrique à section transversale circulaire et à axe horizontal, et ses parois verticales extrêmes comportent des dispositifs d'étanchéité et de centrage désignés par le chiffre de référence 9.

Ces dispositifs sont connus en soi et seront préférentiellement du type à garniture mécanique avec contre-pression liquide.

Les dispositifs 9 soutiennent et centrent un arbre cylindrique 10, comportant une pluralité de pâles disposées dans un plan vertical, réparties en équipages espacés longitudinalement et destinées à brasser la semence et à assurer le renouvellement de l'interface réactionnelle lors du traitement.

Ces dispositifs à pâles ont également pour fonction d'homogénéiser la couche de semence lors du traitement.

La distance longitudinale séparant deux équipages de pâles successifs sera adaptée en fonction du type et de la nature de la semence ou des bulbes à traiter.

Dans le cas des semences, les demandeurs ont constaté que cette distance doit être préférentiellement comprise entre 50 et 300 mm, pour un réacteur présentant un diamètre d'environ 1m à 1,2 m.

De même, le nombre de pâles constituant un équipage élémentaire représenté par le chiffre de référence 11 doit être adapté à la nature de la semence ainsi qu'au taux de brassage requis. Préférentiellement, chaque équipage élémentaire 11 comprendra 4 pâles disposées dans un même plan, en étant angulairement réparties de façon régulière, c'est-à-dire espacées de 90°.

La forme des pâles devra être choisie pour assurer un brassage efficace des semences ou bulbes à traiter et sera fonction, dans le cas des semences, de leur taille et de leur nature.

Les figures 3A et 3B représentent, à titre d'exemple non limitatif, deux profils particuliers de pâles répondant aux exigences précitées.

L'arbre cyclindrique 10 et les équipages 11 sont solidaires de cet axe et sont entraînés en rotation par un ensemble moteur 12 moto-réducteur 13.

La vitesse de rotation des équipages variera bien entendu en fonction de la nature des semences ou des bulbes, de leur taille et de leur fragilité relative.

Des vitesses de rotation préférées seront comprises entre 20 et 100 t/min.

Dans le cas où le réacteur doit être utilisé pour le traitement de semences de nature variée l'alimentation électrique du moteur pourra se faire à l'aide d'un variateur de fréquence afin d'ajuster la vitesse de rotation en fonction de la nature de la semence.

Le réacteur 2 comporte à sa partie supérieure, un orifice 14 d'introduction des semences ou des bulbes à traiter et à sa partie inférieure, un orifice 15 de soutirage des semences ou bulbes traitées, cet orifice étant muni d'une fermeture étanche.

Le réacteur 2 comporte également un conduit d'évacuation du gaz, débouchant dans une installation désignée par le chiffre de référence 16 permettant la destruction de l'ozone résiduel en excès avant son rejet à l'atmosphère.

L'installation représentée schématiquement à la figure 1 permet donc de travailler de façon discontinue par la technique dite du "batch".

En référence à la figure 2, on décrira maintenant une installation permettant de mettre en oeuvre le procédé conforme à la présente invention de façon continue.

Comme décrit précédemment en référence à la figure 1, le gaz ozoné est produit par un générateur industriel 1 éventuellement couplé à un dispositif d'humidification 3.

Le débit du gaz ozoné peut être mesuré et ajusté au moyen des dispositifs de mesure et de réglage 4, 5, 6, 7 décrits précédemment.

L'ozone sera introduit à l'intérieur du réacteur 22 par l'intermédiaire d'un tore 20 alimentant des buses verticales 21 débouchant à l'intérieur du réacteur.

Le nombre et la disposition de ces buses 21 pourront être facilement déterminés par l'homme de métier, en fonction de la nature des semences ou des bulbes à traiter, et de la hauteur de la couche de semences ou de bulbes dans le réacteur.

Le réacteur 22 se présente sous la forme d'un corps cylindroconique à axe vertical, dont les dimensions seront calculées de façon à assurer le temps de contact nécessaire au traitement de la semence ou des bulbes.

Le réacteur 22 est fermé à son extrémité supérieure par un fond bombé 23 solidarisé au corps de réacteur par un montage à brides 24 avec dispositif d'étanchéité et de centrage.

Le fond bombé 23 comporte en son centre qui est disposé sensiblement selon l'axe vertical de symétrie du réacteur, un orifice muni de brides sur lesquelles vient s'insérer un dispositif de guidage, de centrage et d'étanchéité 25, de type à garniture mécanique à contre-pression de liquide.

Un moteur 27 couplé à un moto-réducteur 26 entraîne un arbre vertical 18 traversant le réacteur et centré à sa partie inférieure par un dispositif à crapodine 28. L'arbre 18 est monté solidaire d'un dispositif d'agitation et de brassage 30 de la semence ou des bulbes à traiter, entraîné en rotation par ledit arbre.

Le moteur 27 peut être alimenté par un variateur de fréquence afin de pouvoir ajuster sa vitesse de rotation en fonction de la nature de la semence ou des bulbes à traiter.

Le dispositif d'agitation et de brassage 30 précité est composé de plaques verticales 29, dont la largeur peut être comprise entre 40 et 100 mm, reliées à l'arbre 18 par des bras horizontaux 31 assurant le centrage de l'équipage mobile.

Le nombre de plaques ou lames de brassage 29 est également fonction de la taille et de la nature de la semence à traiter. Dans une exécution préférée, le dispositif d'agitation comprendra entre 3 et 6 lames verticales 29, uniformément réparties dans l'espace.

Les bras supports 31 sont destinés à assurer le positionnement des lames 29 ainsi que le brassage horizontal des semences ou des bulbes à traiter.

A sa partie inférieure, le réacteur 22 est pourvu d'une portion en forme de tronc de cône reliée à son extrémité inférieure à un dispositif de soutirage des semences ou des bulbes traités, par des brides 32 comportant des joints d'étanchéité.

La paroi bombée 23 comporte un orifice à brides muni de joints d'étanchéité et communiquant avec une trémie de stockage 33, dont le volume est suffisant pour assurer l'autonomie de fonctionnement du réacteur. La trémie 33 est équipée à sa partie inférieure d'un dispositif de dosage volumétrique 34 qui peut être du type vanne alvéolaire ou vanne tournante afin d'éviter toute dégradation des semences lors du dosage. Ce dispositif de dosage volumétrique 34 assure en outre l'étanchéité du réacteur et permet d'éviter un reflux gazeux.

Le fonctionnement de l'installation qui vient d'être décrit en référence à la figure 2 se déduit aisément de sa structure.

La semence ou les bulbes à traiter provenant de la trémie de stockage 33 entrent par gravité dans le réacteur 22 et sont homogénéisés par le dispositif d'agitation et de brassage 30 précité.

Durant le temps de la réaction, la semence ou les bulbes brassés descendent progressivement dans le réacteur sous un niveau constant.

Lorsqu'ils ont parcourru une distance correspondant à la hauteur du réacteur, ils sont soutirés par un dispositif d'extraction 36, de type vanne alvéolaire ou vanne rotative. Ainsi, comme on le comprend, on peut extraire de façon continue la semence ou les bulbes traités en réglant le débit du dispositif d'extraction 36 à une valeur identique à celle du dispositif d'extraction 34 associé à la trémie 33.

A la sortie du dispositif d'extraction 36, la semence ou les bulbes tombent dans une trémie de stockage intermédiaire 37 reliée à une installation de conditionnement classique représentée par le chiffre de référence 38.

Avantageusement, la trémie 37 est pourvue d'un dispositif automatique de dégazage 39 dont la fonction est de permettre de travailler tout à la fois sous atmosphère d'ozone résiduel maintenant un milieu stérile et d'évacuer l'excès du ciel gazeux de la trémie 37 vers un dispositif de destruction de l'ozone résiduel 40.

La partie supérieure du réacteur 22 comporte un ciel gazeux 19 situé au-dessus du niveau fixé de la semence ou des bulbes à traiter.

Ce ciel gazeux collecte le gaz réactionnel après passage au travers du lit de semence ou de bulbes, et son volume est vidangé en permanence à l'aide d'un dispositif de réglage 41, avant son introduction dans le dispositif de destruction de l'ozone résiduel en excès 40.

A la sortie du dispositif de destruction 40, le flux gazeux peut être rejeté à l'atmosphère.

Les installations décrites en référence aux figures 1 et 2 ont été utilisées pour le traitement de semences d'origine diverse et en particulier du maïs, du haricot, de l'orge et du tournesol.

On a ainsi réalisé 96 essais pour le maïs, 32 essais pour le haricot, 21 essais pour l'orge et 14 essais pour le tournesol.

Chaque essai a été réalisé avec six répétitions en moyenne.

Pour chacun de ces essais, 60 graines ont été traitées. Chacun des lots de semences ayant subit le traitement conforme à la présente invention, a été planté en chambre de culture dans des conditions standards, et systématiquement comparé à des lots de semences non traitées, plantées dans les mêmes conditions.

Les observations, statistiques de levée ainsi que les pesées de la biomasse obtenue ont été effectuées après des durées variables.

Les résultats obtenus sont les suivants :
- pourcentage de germination compris entre 93 et 97 %, suivant la nature de la semence traitée ;
- accroissement de la matière sèche de la biomasse produite compris entre 8 et 25 %, suivant la nature de la semence ; cet accroissement étant déterminé en valeur par comparaison de la quantité de matière sèche obtenue à partir de la biomasse produite sur des semences non traitées.

Ces essais démontrent l'intérêt d'un traitement par l'ozone des semences, notamment au regard de leur propriété germinative et/ou de leur croissance, ainsi que de l'intérêt d'ajuster le taux d'humidité résiduelle des semences ou bulbes traités.

Les conditions optimales définies par les demandeurs vis-à-vis de chacune des espèces précitées sont les suivantes :

| Nature de semence : **Maïs** | |
|---|---|
| Variété | SUMO |
| - Temps de séjour de la semence dans le réacteur | entre 5 et 10 min |
| - Concentration d'ozone dans le gaz vecteur | entre 20 et 40 g/Nm³ |
| - Pression de l'atmosphère gazeux dans le réacteur | entre 100 et 300 mbar |
| - Taux d'humidité de la graine | entre 10 et 20 % |
| - Taux de traitement par l'ozone des graines entre 0,001 et 0,028 g O₃/g de semence. | |

| Nature de la semence : **Haricot** | |
|---|---|
| - Variété | VERNEL |
| - Temps de séjour de la semence dans le réacteur | entre 8 et 12 min |
| - Concentration d'ozone dans le gaz vecteur | entre 20 et 40 g/Nm³ |
| - Pression de l'atmosphère gazeux dans le réacteur | entre 100 et 300 mbar |
| - Taux de traitement par l'ozone des graines entre 0,003 et 0,007 g O₃/g de semence. | |
| - Taux d'humidité de la graine | entre 10 et 20%. |

| Nature de la semence : **Orge** | |
|---|---|
| - Variété | TREMOIS |
| - Temps de séjour de la semence dans le réacteur | entre 12 et 17 min |
| - Concentration d'ozone dans le gaz vecteur | entre 70 et 90 g/Nm³ |
| - Pression de l'atmosphère gazeux dans le réacteur | entre 100 et 300 mbar |
| - Taux de traitement par l'ozone des graines entre 0,012 et 0,016 g O₃/g de semence. | |
| - Taux d'humidité de la graine | entre 10 et 20%. |

| Nature de la semence : **Tournesol** | |
|---|---|
| -Variété | DK 3840 |
| - Temps de séjour de la semence dans le réacteur | entre 12 et 17 min |
| - Concentration d'ozone dans le gaz vecteur | entre 30 et 85 g/Nm³ |
| - Pression de l'atmosphère gazeux dans le réacteur | entre 100 et 300 mbar |
| - Taux de traitement par l'ozone des graines entre 0,018 et 0,026 g O₃/g de semence. | |
| - Taux d'humidité de la graine | entre 10 et 20%. |

## Revendications

1. Procédé de traitement des semences et des bulbes, dans lequel préalablement à leur plantation et notamment en vue d'améliorer leurs propriétés germinatives et/ou leur croissance, on met lesdites semences ou lesdits bulbes en contact avec de l'ozone, préférentiellement produit à partir de gaz vecteurs, caractérisé en ce que l'on ajuste le taux d'humidité résiduelle desdites semences ou desdits bulbes préalablement ou simultanément à leur mise en contact avec l'ozone, à une valeur améliorant l'accessibilité de l'ozone aux structures lignocellulosiques, cette valeur étant de préférence comprise entre 5 et 60 % par rapport au poids des semences ou des bulbes, les semences et bulbes traités étant susceptibles d'être stockés sans étape supplémentaire de séchage.

2. Procédé selon la revendication 1, caractérisé en ce que l'ozone est utilisé pour le traitement précité en une quantité comprise entre 0,002 et 0,1 exprimée en gramme d'ozone par gramme de semence.

3. Procédé selon la revendication 1 ou 2, caractérisé en ce que la durée du traitement précité est comprise entre 2 et 30 minutes.

4. Procédé selon l'une des revendications 1 à 3, caractérisé en ce que l'ozone utilisé pour le traitement précité est produit à partir d'un gaz vecteur et en ce que la concentration de l'ozone dans le gaz vecteur est comprise entre 20 et 100 g/Nm³.

5. Procédé selon l'une des revendications 1 à 4, caractérisé en ce que le traitement précité est mis en oeuvre dans un réacteur et en ce que la pression de l'atmosphère gazeux dans le réacteur est comprise entre 100 et 1 000 mbar.

6. Procédé selon l'une des revendications 1 à 5, caractérisé en ce que en vue d'ajuster le taux d'humidité desdites semences ou desdits bulbes, le gaz vecteur contenant l'ozone est saturé en eau à pression et température ambiantes, de préférence par bullage dans de l'eau déminéralisée.

7. Procédé selon l'une des revendications 1 à 6, caractérisé en ce qu'il est mis en oeuvre de façon discontinue, de préférence dans un réacteur à axe horizontal agité.

8. Procédé selon l'une des revendications 1 à 6, caractérisé en ce qu'il est mis en oeuvre de façon continue, de préférence dans un réacteur à axe vertical agité.

9. Installation pour la mise en oeuvre du procédé selon l'une des revendications 1 à 9 comprenant :
- un dispositif de production d'ozone, de préférence dans un gaz vecteur ;
- un réacteur destiné à permettre la mise en contact de l'ozone avec des semences ou des bulbes ;
caractérisée en ce qu'elle comprend en outre des moyens permettant d'ajuster le taux d'humidité résiduelle des semences ou des bulbes, à une valeur améliorant l'accessibilité de l'ozone aux structures lignocellulosiques, cette valeur étant de préférence comprise entre 5% et 60% par rapport au poids des semences ou des bulbes et en ce que ledit réacteur est conformé pour permettre d'assurer en permanence un renouvellement de l'interface réactionnel et une accessibilité de chacune des graines ou de chacun des bulbes à traiter.

## Claims

1. A method of treating seed and bulbs, in which method prior to planting and in particular for the purpose of improving the germination properties and/or the growth thereof, said seed or bulbs are put into contact with ozone, preferably produced from vector gases, characterised in that the residual moisture content of said seed or said bulbs is adjusted before or simultaneously with their being put into contact with the ozone, to a value which improves the accessibility of the ozone to the ligno-cellulosic structures, this value preferably being between 5% and 60% relative to the weight of the seed or the bulbs, the treated seed and bulbs being susceptible to be stored without further drying step.

2. The method according to claim 1, characterised in that the quantity of ozone used for the above treatment is between 0.002 and 0.1 expressed in grams of ozone per gram of seed.

3. The method according to claim 1 or 2, characterised in that the duration of the above treatment is between 2 minutes and 30 minutes.

4. The method according to any one of claims 1 to 3, characterised in that the ozone used for the above treatment is produced from a vector gas, and in that the concentration of ozone in the vector gas is between 20 g/Nm³ and 100 g/Nm³.

5. The method according to any one of claims 1 to 4, characterised in that the above treatment is implemented in a reactor, and in that the pressure of the gaseous atmosphere inside the reactor is between 100 mbar and 1,000 mbar.

6. The method according to any one of claims 1 to 5, characterised in that in order to adjust the moisture content of said seed or of said bulbs, the vector gas containing the ozone is saturated with water at ambient pressure and temperature, preferably by being bubbled through demineralised water.

7. The method according to any one of claims 1 to 6, characterised in that it is implemented discontinuously, preferably in a reactor having stirring about a horizontal axis.

8. The method according to any one of claims 1 to 6, characterised in that it is implemented continuously, preferably in a reactor having stirring about a vertical axis.

9. An installation for implementing the method according to any one of claims 1 to 9, comprising:
- a device for producing ozone, preferably in a vector gas; and
- a reactor to enable the ozone to be put into contact with the seed or the bulbs ;
characterised in that it further comprises means enabling the residual moisture content of the seed or the bulbs to be adjusted, to a value which improves the accessibility of the ozone to the ligno-cellulosic structures, this value preferably being between 5% and 60% relative to the weight of the seed or the bulbs; and in that said reactor is shaped to enable the reaction interface to be renewed continuously and to provide access to each of the seeds or to each of the bulbs to be treated.

## Patentansprüche

1. Verfahren zur Behandlung von Saatgut und Knollen, wobei vor deren Einpflanzung, insbesondere um ihre keimfähigen Eigenschaften und/oder ihr Wachstum zu verbessern, das Saatgut oder die Knollen mit Ozon in Kontakt gebracht werden, welches vorzugsweise ausgehend von Vektorgas hergestellt ist, dadurch gekennzeichnet, dass der Gehalt an Restfeuchtigkeit des Saatguts oder der Knollen vor oder gleichzeitig mit ihrem In-Kontakt-Bringen mit Ozon auf einen bestimmten Wert eingestellt wird, um die Zugänglichkeit des Ozons zu den Lignocellulose-Strukturen zu verbessern, wobei dieser Wert vorzugsweise zwischen 5 und 60% in Bezug auf das Gewicht des Saatguts oder der Knollen beträgt, so dass das behandelte Saatgut und die behandelten Knollen geeignet sind, ohne einen zusätzlichen Trocknungsschritt gelagert zu werden.

2. Verfahren nach Anspruch 1, dadurch gekennzeichnet, dass das Ozon für die oben genannte Behandlung in einer Menge zwischen 0,002 und 0,1 ausgedrückt in Gramm Ozon pro Gramm Saatgut verwendet wird.

3. Verfahren nach Anspruch 1 oder 2, dadurch gekennzeichnet, dass die Dauer der oben genannten Behandlung zwischen 2 und 30 Minuten beträgt.

4. Verfahren nach einem der Ansprüche 1 bis 3, dadurch gekennzeichnet, dass das für die oben genannte Behandlung verwendete Ozon ausgehend von einem Vektorgas hergestellt ist und dadurch, dass die Ozonkonzentration im Vektorgas zwischen 20 und 100 g/Nm³ beträgt.

5. Verfahren nach einem der Ansprüche 1 bis 4, dadurch gekennzeichnet, dass die oben genannte Behandlung in einem Reaktor stattfindet und dadurch, dass der Gasatmosphärendruck in dem Reaktor zwischen 100 und 1 000 mbar beträgt.

6. Verfahren nach einem der Ansprüche 1 bis 5, dadurch gekennzeichnet, dass in Hinsicht auf das Einstellen des Feuchtigkeitsgehalts des Saatguts und der Knollen das Vektorgas enthaltend Ozon mit unter Druck stehendem Wasser bei Raumtemperatur gesättigt ist, insbesondere durch Durchperlen in demineralisiertes Wasser.

7. Verfahren nach einem der Ansprüche 1 bis 6, dadurch gekennzeichnet, dass es auf diskontinuierliche Weise abläuft, vorzugsweise in einem Reaktor mit bewegter horizontaler Achse.

8. Verfahren nach einem der Ansprüche 1 bis 6, dadurch gekennzeichnet, dass es auf eine kontinuierliche Weise abläuft, vorzugsweise in einem Reaktor mit bewegter vertikaler Achse.

9. Vorrichtung zur Durchführung des Verfahrens nach einem der Ansprüche 1 bis 9 aufweisend eine Einrichtung zur Produktion von Ozon, insbesondere in einem Vektorgas; einen Reaktor um das Ozon mit dem Saatgut oder den Knollen in Kontakt zu bringen, dadurch gekennzeichnet, dass sie weiters Mittel aufweist, die den Gehalt an Restfeuchtigkeit des Saatguts oder der Knollen auf einen Wert zur Verbesserung der Zugänglichkeit des Ozons zu den Lignocellulose-Strukturen einstellen, wobei dieser Wert vorzugsweise zwischen 5% und 60% in Bezug auf das Gewicht des Saatguts oder der Knollen beträgt und dadurch, dass der Reaktor eingerichtet ist, um eine Erneuerung der Reaktionsfläche und eine Zugänglichkeit eines jeden Kornes oder Jeder Knolle, die zu behandeln sind, ständig zu sichern.
